# DEMANDE DE BREVET EUROPEEN

(11) **EP 0 790 575 A1**
(43) Date de publication de la demande: **20.08.1997**
(21) Numéro de dépôt: 97400292.5
(22) Date de dépôt: 10.02.1997
(51) Int. Cl.: G06K 13/08

(54) **Dispositif de filtre d'épaisseur dans une goulotte d'introduction d'un lecteur de titres tels que tickets, cartes**

(30) Priorité: 16.02.1996 FR 9601947
(71) Demandeur: COMPAGNIE GENERALE D'AUTOMATISME CGA-HBS, F-91220 Bretigny sur Orge (FR)
(72) Inventeur: Schoenhenz, Daniel, 91610 Ballancourt (FR)
(74) Mandataire: Gosse, Michel

(57) **Abrégé**

Le dispositif comporte un équipage mobile comprenant un étrier (4) en forme de chape, pivotant autour d'un axe fixe (10) parallèle au support plan (6) de passage du titre (1) et perpendiculaire à la direction (X, Y) de son déplacement le long de ce plan, et un galet (5) monté dans l'étrier (4). Le galet (5) comporte un axe support (11), parallèle à l' axe fixe (10) et monté dans l'étrier (4) avec un jeu tel qu'il permet au galet (5), en l'absence de titre (1) entre le galet (5) et le plan (6), de s'appuyer sur ce plan avec une pression calibrée par un moyen élastique (14) de traction, le jeu permettant également au galet (5), sous l'effet d'un effort s'opposant au moyen élastique (14), de venir jusqu'en appui contre une paroi (9) de l'étrier assurant la liaison entre deux joues parallèles (7, 8) de l'étrier formant chape. En l'absence de titre (1) sur le plan (6), le plan (Δ) contenant l'axe fixe (10) et ledit axe support (11) fait un angle aigu α avec le plan normal (γ) au plan (6) et contenant l'axe fixe (10), le plan (Δ) contenant les deux axes (10, 11) étant situé, par rapport audit plan normal (γ), du côté du titre (1) avant son introduction dans la machine, l'étrier (4) étant en outre soumis à l'action d'un moyen élastique (16) maintenant constant, l'angle (α) tant que le seul effort de frottement du galet est celui de son axe (11) au cours de sa rotation, donc sans contact du galet contre la paroi (9) de l'étrier (4).

## Description

La présente invention concerne un dispositif de filtre d'épaisseur dans une goulotte d'introduction d'un lecteur de titres tels que tickets, cartes... d'une machine quelconque, permettant en sortie le passage par la même goulotte d'une épaisseur supérieure à celle dans le sens de l'entrée.

Actuellement, on utilise, soit une simple fenêtre d'entrée calibrée qui présente l'inconvénient de ne pas permettre le passage en sortie et donc de provoquer un bourrage lorsque, par exemple, le titre est froissé, après introduction, au cours du traitement dans la machine.

On connaît également des systèmes d'obturation commandés mécaniquement ou électromécaniquement, mais ces systèmes sont coûteux et peu fiables.

L'invention a ainsi pour but de proposer un dispositif simple, efficace, permettant l'introduction de titres de faible épaisseur tout en autorisant facilement la sortie par le même chemin d'un titre dans un état d'épaisseur, provoquée par exemple par un certain froissement au cours de son traitement, n'ayant pas permis son introduction en entrée. L'invention procure également une pression calibrée à l'entrée et à la sortie du titre.

L'invention a ainsi pour objet un dispositif de filtre d'épaisseur dans une goulotte d'introduction d'un lecteur de titres tels que tickets, cartes, d'une machine quelconque, ledit titre cheminant, lors de son introduction et de sa restitution par le même chemin, de manière qu'une surface du titre s'appuie contre un support plan, caractérisé en ce qu'il comporte un équipage mobile comprenant un étrier en forme de chape, pivotant autour d'un axe fixe parallèle audit support plan et perpendiculaire à la direction de déplacement du titre le long de ce plan, et un galet monté dans ledit étrier, en ce que ledit galet comporte un axe support, parallèle audit axe fixe et monté dans ledit étrier avec un jeu tel qu'il permet au galet, en l'absence de titre entre le galet et ledit support plan, de s'appuyer sur ledit support avec une pression calibrée par un moyen élastique de traction s'exerçant sur ledit axe support vers ledit support plan et perpendiculairement à celui-ci, ledit jeu permettant également au galet, sous l'effet d'un effort s'opposant audit moyen élastique, de venir jusqu'en appui contre une paroi dudit étrier assurant la liaison entre deux joues parallèles de l'étrier formant chape, et en ce qu'en l'absence de titre sur ledit support plan, le plan contenant l'axe fixe et ledit axe support fait un angle aigu α avec le plan normal audit plan support et contenant ledit axe fixe, le plan contenant les deux axes étant situé, par rapport audit plan normal, du côté du titre avant son introduction dans la goulotte de la machine, ledit étrier étant en outre soumis à l'action d'un moyen élastique maintenant constant ledit angle α tant que le seul effort de frottement du galet est celui de son axe support au cours de sa rotation, donc sans contact du galet contre ladite paroi dudit étrier.

On va maintenant donner la description d'un exemple de mise en oeuvre de l'invention en se reportant au dessin annexé dans lequel :

La figure 1 montre en vue de face, en demi-coupe selon 1-1 de la figure 2 un dispositif de limitation d'épaisseur dans une goulotte d'introduction d'un lecteur de titres, tickets ou cartes, d'une machine quelconque selon l'invention.

La figure 2 est une vue en coupe du dispositif selon ll-Il de la figure 1.

La figure 3 est un schéma représentatif du fonctionnement du dispositif dans le cas du passage d'un titre d'épaisseur convenable.

La figure 4 représente le cas où le titre est trop épais et ne peut pas passer.

La figure 5 représente le cas de la restitution d'un titre, sans difficulté, malgré le fait qu'au cours de son traitement, après introduction dans la machine, il ait subi un froissement lui donnant une épaisseur apparente supérieure à son trajet aller et telle qu'à aller il ne serait pas passé.

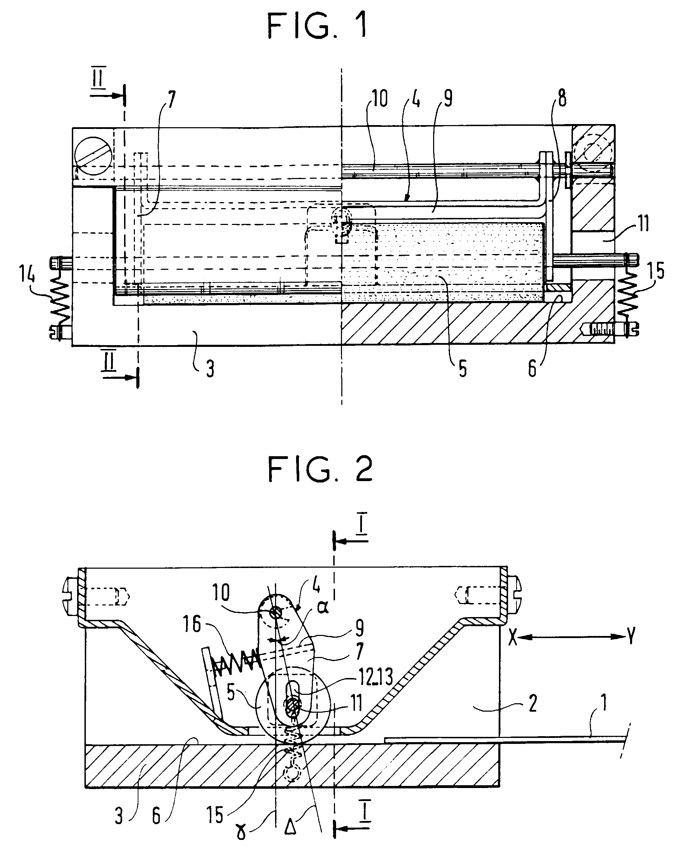

En se référant aux figures 1 et 2, le dispositif, qui est situé à l'avant d'une machine quelconque, non représentée, lecteur de titres tels que tickets ou cartes 1 consiste en un filtre limitant l'épaisseur d'entrée du titre lors de son introduction dans une goulotte 2.

Le dispositif comprend un bâti 3 sur lequel est monté un équipage mobile comportant un étrier 4 et un galet 5 monté dans l'étrier. Le bâti 3 comprend une semelle plane constituant un support plan 6 pour le passage d'un titre tel que 1 cheminant de façon que l'une de ses surfaces s'appuie contre ce support plan 6.

L'étrier 4 forme une chape comportant deux joues 7 et 8 reliées par une paroi 9. Il est monté pivotant autour d'un axe fixe 10 lié au bâti 3. L'axe 10 est parallèle au plan support 6 et perpendiculaire à la direction X, Y de cheminement (X pour l'aller, Y pour le retour) d'un titre tel que 1.

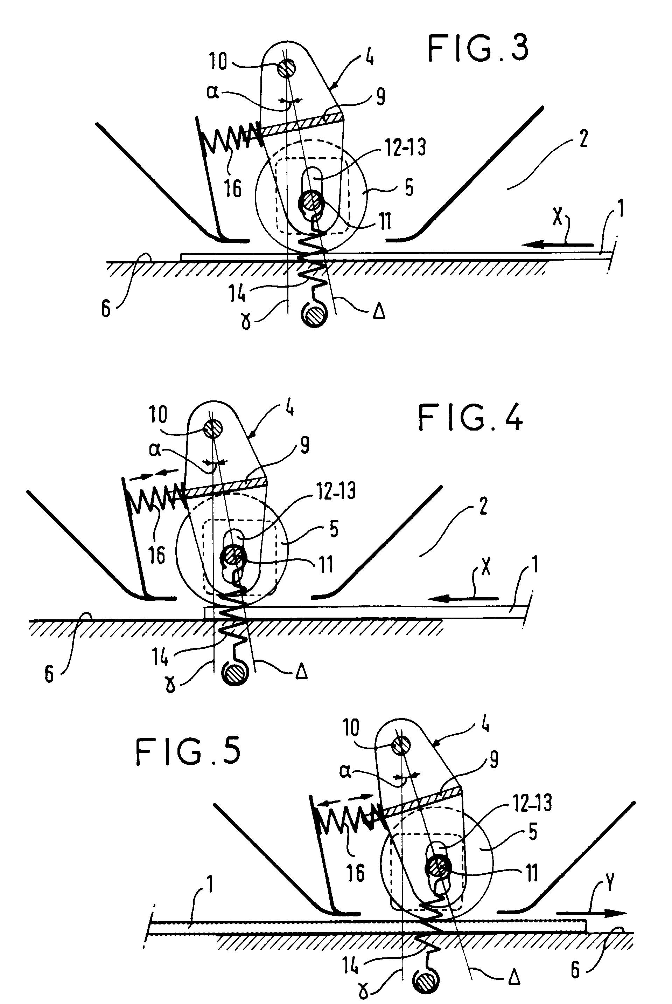

Le galet 5 est monté dans l'étrier 4 par l'intermédiaire d'un axe support 11 traversant des lumières oblongues 12 et 13 des joues 7 et 8 de telle sorte que le galet ait un certain jeu dans l'étrier 5. L'axe support 11 est parallèle à l'axe fixe 10. Le jeu du galet 5 dans son étrier 4, permis par les lumières oblongues 12 et 13, est tel qu'il permet au galet 5, si aucun titre tel que 1 ne se trouve entre le galet et le plan support 6, de s'appuyer directement sur ce support plan 6, comme le montre la figure 2, et en y exerçant un effort calibré par deux ressorts de rappel 14 et 15 exerçant une traction sur l'axe support 11 vers et perpendiculairement au plan support 6. Ce jeu permet également au galet 5 de venir jusqu'en appui contre la paroi 9 reliant les deux joues 7 et 8 de l'étrier 4, en s'opposant à la traction des ressorts 14 et 15. Cette position est celle du schéma fonctionnel de la figure 4 où l'on voit un titre 1 d'une épaisseur limite empêchant son passage : plus on forcera, plus cela coincera.

Dans la position représentée figure 2, donc au repos, lorsqu'aucun titre ne se trouve entre le galet 5 et le plan support 6, le plan Δ contenant l'axe (géométrique) fixe 10 et l'axe (géométrique) support 11, fait un angle aigu α avec le plan γ perpendiculaire au support plan 6 et contenant l'axe (géométrique) 10. Le plan Δ contenant les deux axes 10 et 11 est situé, par rapport au plan γ, du côté du titre 1 avant son introduction dans la machine.

Enfin, l'étrier 4 est soumis à l'action d'un ressort de poussée 16 qui compense l'action de la force de frottement de l'axe support 11 du galet 5 lors de sa rotation, de telle sorte que, tant que l'épaisseur d'un titre 1 est tel que le galet 5 ne vient pas frotter contre la paroi 9 de l'étrier, le seul effort de frottement est celui de l'axe support 11 dû à la rotation du galet, et l'angle α reste alors constant, c'est la situation représentée figure 3 dans laquelle le titre 1 peut passer. En revanche, si l'épaisseur du titre est tel que le galet vient frotter contre la paroi 9, alors la poussée du titre dans le dispositif entraîne la compression du ressort 16 et la rotation de l'étrier 4, donc une diminution de l'angle α et donc de l'espace entre le support plan 6 et le galet 5 provoquant le coincement du titre qui ne fait qu'augmenter si l'on force, empêchant ainsi l'introduction du titre. C'est la situation représentée figure 4.

Si au cours du traitement du titre 1 dans la machine, il s'est produit un froissement du titre tel que son épaisseur apparente (à cause d'ondulations par exemple) est supérieure à celle permettant son entrée, il n'y a pas de difficulté pour sa sortie car la poussée du titre dans le sens Y par les organes d'entraînement, non représentés de la machine, provoque l'augmentation de l'angle α et donc la distance entre le support plan 6 et le galet 5. C'est la situation représentée figure 5.

L'homme de l'art choisira le jeu à donner au galet dans la position de repos (figure 2) pour l'épaisseur maximale du titre et l'angle α au repos en fonction des coefficients de frottement et de l'effort de coincement souhaité. La surface du galet 5 est avantageusement caoutchoutée.

## Revendications

1. Dispositif de filtre d'épaisseur dans une goulotte d'introduction (2) d'un lecteur de titres (1) tels que tickets, cartes, d'une machine quelconque, ledit titre cheminant lors de son introduction et de sa restitution par le même chemin, de manière qu'une surface du titre s'appuie contre un support plan (6), caractérisé en ce qu'il comporte un équipage mobile comprenant un étrier (4) en forme de chape pivotant autour d'un axe fixe (10) parallèle audit support plan (6) e perpendiculaire à la direction (X, Y) de déplacement du titre (1) le long de ce plat (6), et un galet (5) monté dans ledit étrier (4), en ce que ledit galet (5) comporte un axe support (11), parallèle audit axe fixe (10) et monté dans ledit étrier (4 avec un jeu tel qu'il permet au galet (5), en l'absence de titre (1) entre le galet (5 et ledit support plan (6), de s'appuyer sur ledit support (6) avec une pression calibrée par un moyen élastique (14) de traction s'exerçant sur ledit axe suppor (11) vers ledit support plan (6) et perpendiculairement à celui-ci, ledit jeu permettant également au galet (5), sous l'effet d'un effort s'opposant audit moye élastique (14), de venir jusqu'en appui contre une paroi (9) dudit étrier assuran la liaison entre deux joues parallèles (7, 8) de l'étrier formant chape, et en ce qu'en l'absence de titre (1) sur ledit support plan (6), le plan (Δ) contenant l'axe fixe (10) et ledit axe support (11) fait un angle aigu α avec le plan normal (γ) audit plan support (6) et contenant ledit axe fixe (10), le plan (Δ) contenant les deux axes (10, 11) étant situé, par rapport audit plan normal (γ), du côté du titre (1) avant son introduction dans la goulotte de la machine, ledit étrier (4) étant en outre soumis à l'action d'un moyen élastique (16) maintenant constant ledit angle α tant que le seul effort de frottement du galet est celui de son axe support (11) au cours de sa rotation, donc sans contact du galet contre ladite paroi (9) dudit étrier (4).
